# EUROPEAN PATENT APPLICATION

(11) **EP 2 862 948 A1**
(43) Date of publication of application: **22.04.2015**
(21) Application number: 14466021.4
(22) Date of filing: 15.10.2014
(51) Int. Cl.: C22B 1/00, C22B 7/00

(54) **Method of removing petroleum substances from materials contaminated by them and equipment for carrying out this method**

(30) Priority: 18.10.2013 CZ 20130801
(71) Applicant: Trinecké Zelezárny, a.s., 739 61 Trinec (CZ)
(72) Inventor: Raclavský, Milan, 70800 Ostrava-Poruba (CZ); Mlcoch, Petr, 73954 Komorní Lhotka (CZ); Hermann, Radek, 73961 Trinec VI (CZ); Tacina, Marek, 73994 Trinec (CZ); Lasota, Libor, 73998 Mosty u Jablunkova (CZ)
(74) Representative: Belfin, Vladimir

(57) **Abstract**

Method of removing petroleum substances from materials contaminated by them consists in the refining of the contaminated material by their indirect heating in a closed furnace space at temperatures from 250 to 750°C. The enclosed furnace space also is washed by a protective gas atmosphere with an oxygen content max. of 15 % by volume after which the mixture of gases and water vapour generated by evaporation and decomposition of the present petroleum substances and liquids from contaminated materials is removed from the closed furnace space and subjected to cooling and condensation. During refining, the materials contaminated with petroleum substances are mixed and after reaching the final heating temperature and termination of the refining process they are cooled by spraying water in an amount up to 300 l per 1000 kg of processed material, while during the condensation the non-condensed part of the mixture of gases and water vapour is discharged for further processing and / or at least partially as process gases they are returns to the refining process as process gasses. The equipment consists of a refining furnace (1) with a heat source (2) of indirect heating of the furnace chamber (3) and with a charging input (4) of materials contaminated by petroleum substances as well as discharge outlet (8) of materials freed from petroleum substances, which is provided with a charge mixing device (10), arranged in its furnace chamber (3) as well as supply input (6) of inert gas from a pressure source (7) and discharge pipeline (12) of the mixture of gas and the water vapour produced by decomposition and evaporation of liquids in the charge, to the condenser (13) with a branched outlet (15) of the individual condensation products.

## Description

### Field of the Invention

The invention relates to a method of removing petroleum substances from materials contaminated by them, in particular from metal waste originating in the process of production and processing of metals, for the purpose of their reuse, for example as a metal-bearing charge to the blast furnaces or as a pigment, as well as an equipment for carrying out this method.

### Background of the Invention

Scales, scale sludge, grinding dust, chips and other metal-bearing wastes, contaminated with oil or other petroleum substances were hitherto processed in agglomeration charge, but only in the agglomeration where the wet flue gas cleaning was installed, but there may commonly occurred problems with pollution of wastewater. Vast majority of agglomerations are fitted with electrostatic flue gas cleaning systems that allow processing of these metal-bearing wastes only to a limited extent, because as the gasification of the shares of petroleum substances and their transition into the flue gas can cause fire of the electrostatic filter. Therefore, the requirements of agglomeration plants that are equipped with electrostatic filters are specified with regard to the share of petroleum substances in the processed metal-bearing waste at 0.1 to 2.0% by weight.

The removal of petroleum substances in various materials is performed by a number of known methods, which are, however, with regard to the requirements of the agglomeration plants little effective or highly expensive. For example, the use of ultrasound can reduce oil shares only by about 50 to 80 % by weight, which, for example, at the input oil content in scales and scale sludge of 2-15 % by weight is totally insufficient.

Another way of processing of oiled scales and scale sludge is to add them to the coking charge and produce so-called ferrous coke. However, this method requires the processing of produced coke exclusively for metallurgical purposes.

Given that part of the coke is used for power engineering, for a practical application it would be necessary to build two completely separate sorting and transport lines, which would require enormous costs.

Another method for removal of oil substances from scale, scale sludge and other metal-bearing waste consists in using degreasing agents, for example AQUASOL. These preparations, however, are based on aliphatic hydrocarbons, their use is ecologically extremely inconvenient and sometimes even forbidden, while the costs of this process are high.

The most effective method of removal of oil substances from scales, scale sludge and other metal-bearing waste is the hitherto performed thermal incineration. This method is effective and it application resulted in a reduction in the values of oil substances below the required 0.1 % by weight. Construction of incineration plant is costly. The input raw material in the rotary furnace with lining is exposed to temperatures ranging from 800 to 950°C, which results in gasification and oxidation of hydrocarbons. The device is highly energy-consuming and requires high investment and at the operating temperatures it is often subject to adhering of the treated material to the lining. Furthermore the process is due to high temperatures associated with oxidation of FeO to Fe₂O₃, which is at the next processing at agglomeration or blast furnaces more demanding in terms of energy consumption by about 10-15%.

Another known device for treating oiled scales and scale sludge consists of dryer and afterburner chamber, where the dryer and afterburner chamber are interconnected by a line for inlet of flue gas from the dryer into the afterburner chamber. The used dryer is usually a rotary line-free furnace, which is fed with a mixture of scales and scale sludge with a moisture content of 1-15% by wt. and oil substance content of 0.5 -15 wt%, in which there is a burner in which gas or oil are combusted, whereby providing for a temperature of 250-600°C. At this temperature, oil residues are gasified, which are partially burned. Part of the gasified hydrocarbons that are not burnt in the furnace is led in flue gas into the afterburner chamber, wherein there is a temperature ranging from 700 to 950°C, at which due to the highly oxidizing atmosphere in the afterburner chamber they are perfectly combusted. After leaving the afterburner chamber, the flue gases are cooled in a cooler and additionally cleaned in a filter.

Upon outlet from the furnace the scales and scale sludge are cooled and humidified to the desired humidity in the homogenizer and directly transported to processing at the agglomeration plant. After treatment and removal of oiled residues the scales and scale sludge can be briquetted or pelletized and used as blast furnace or agglomeration charge. The disadvantage of this device is, however, formation of a large amount of flue gas, wherein due to the sulphur content in petroleum substances their combustion without desulfurization is not allowed by current legislation, which significantly increases the costs of investment.

The patent documents, for example the document EP0373577A1 further propose the known two-stage process and device for treatment of sewage or industrial sludge containing organic components. Within the process of conversion described therein the sludge is first mechanically dewatered and then transported into the interior of an indirectly heated continuous conveyor, and there it is subjected to heating with concurrent release of slightly volatile components. The following second stage is associated, during the permanence under conversion temperature, with release of the remaining volatile components from this already solid product. In practice, however, such an approach seems to be inefficient because in order to achieve separation of hydrocarbons in such a facility, and also to heat the sludge, it is necessary to maintain a relatively high temperature. Economical operation of the device of this kind can therefore not be achieved.

The document DE19715839A1 then describes a method and apparatus for cleaning sludge containing mill scale containing oil and water, whereas the sludge is also subjected to two-stage treatment. Heating the sludge results in the evaporation of water in the first step. In the second step this already dried sludge is subjected to treatment in a vacuum at an elevated temperature in order to allow outlet of hydrocarbons. In practice, this device also appears to be relatively inefficient, because the equipment needed to create a vacuum leak requires high establishment and operating costs.

Such two-stage procedures are thus characterized by the high cost of these devices, as well as technical demands on control and regulation.

The document AT400579B proposes a single-stage process for displacing organic contaminants such as oils or fats, from wet material containing metals, such as scales or cuts, wherein this material is heated by indirect heating in reducing atmosphere over a temperature above the boiling point of the fraction with the highest boiling of the present organic impurities, and then, to prevent condensation it is flushed with non-oxidizing carrier gas. This process also proves uneconomical in practice, because the material must be heated to a temperature above the boiling point of the organic impurity with the highest boiling point.

The document AT409226B describes an invention of apparatus and method for processing waste material containing hydrocarbons, in particular sludge with mill scale and / or sludge after grinding, wherein the waste material is heated in a drying device by an indirect heat supply and in movement, thereby releasing hydrocarbon compounds and other volatile components, in particular water. It leads to the disintegration of hydrocarbons even at low temperatures by the action of chemical agents and / or radiation, which causes decomposition of hydrocarbons of high molecular weight to hydrocarbons with lower molecular weight, for example by way of selective oxidation, which are further, or together with other volatile components, in particular with water, extracted from the process vessel. The release of moisture contained in the waste substances promotes release of hydrocarbons simultaneously with water mist. In particular, after addition of oxidizing agents containing oxygen, the molecules of hydrocarbons of the group containing oxygen, thereby reducing the water-repellent (hydrophobic) properties of hydrocarbons. This manifests itself particularly favourably in volatilization of hydrocarbons with water mist, so that the consequence is the acceleration of the release of hydrocarbons.

The document AT409226B uses selective oxidation oxygen as an oxidizing agent or air enriched with oxygen for selective oxidation. It is also possible to use, however, other gas mixtures or mixtures of substances containing oxygen. If the waste material itself contains easily oxidizable impurities such as metal magnesium, it may, depending on the grain size, necessary to adjust the oxygen content to a value below 20.8%, so as to limit the oxidation kinetics. In this case, to promote the release of hydrocarbons, it is preferred to apply a method using radiation. The addition of air or other oxidising agents with oxygen may produce hazardous explosive mixtures, which the patent resolves with anti-flare safety.

The present invention therefore seeks to overcome the disadvantages of the above-mentioned known methods and devices for removal of petroleum substances from metal-bearing waste and thus develop a simple, economical and safe procedure allowing the recycling of these materials without harming the environment, as well as equipment for its performance.

### Summary of the Invention

This task is largely achieved by a method of removing petroleum substances from materials contaminated by then, in particular of metal-bearing waste generated during the production and processing of metals, as well as the equipment for carrying out this method according to the presented invention.

The method of removing petroleum substances consists in refining materials contaminated with petroleum substances by indirect heating in a closed furnace space, where the essence of this method according to the invention then consists in that during the refining and the progressive indirect heating materials of contaminated with petroleum substances at temperatures from 250 to 750°C the enclosed furnace space, to promoting vaporization of petroleum substances is washed with protective gas atmosphere with a max. oxygen content of 15% by volume and then the mixture of gases and water vapours generated by evaporation and decomposition of the present petroleum substances and liquids from contaminated materials are removed from the enclosed furnace chamber, subjected to cooling and condensation. Materials contaminated with petroleum substances during refining are mixed and after reaching the final heating temperature and finish of the refining process they are cooled by spraying water of in an amount up to 300 l per 1000 kg of the processed material. Simultaneously, during the condensation, the non-condensed part of the mixture of generated gases and water vapour is discharged for further processing and / or at least partially as controlled process gases, i.e. with regulation of their quantity required to displace the distillate products from the furnace chamber, they return to the refining process. Protective atmosphere in which the refining process takes place is then formed by refining products with recycled non-condensed gases, water vapour and / or inert gases, e.g. nitrogen and argon.

Another way of further processing of the uncondensed part of the gases and water vapour is their final cooling or possibly freezing, capturing in washing machine, electrostatic filter or in a pressure vessel, etc.., or part of the gasses cleaned from dust is thermally or catalytically post-burned. Materials contaminated with petroleum substances are typically refined in batches, but these materials contaminated with petroleum substances can according to the invention be refined also continuously. Refining can optionally be performed at lower temperatures than the above lower limit of 250°C, which, however, considerably prolongs the whole process, since its duration is then extended exponentially. With the optimum temperature range of 500 - 550°C and gradual increasing of the temperature to these values within about 2 - 4 hours, however, the entire methods is the most effective.

The essence of the method according to the invention further consists in the fact that after reaching the final temperature of the heating the enclosed furnace space before opening is preferably inactivated with inert gas to prevent oxidation of the protective atmosphere with air, and possibly cooled.

The procedure according to the invention is highly efficiently used for processing metal-bearing wastes with a content of FeO or Fe₂O₃, whose products are then pure metal-bearing materials containing hydrocarbons below 1 % by weight, which are capable of further use, especially as an additive to the charges of agglomerations or possibly blast furnaces, also the condensed water, a mixture of hydrocarbons - oil with min. calorific value of 35 MJ / kg and the process gas having a hydrogen content of 20 % by volume.

The equipment for carrying out this method consists of the refining furnace with a heat source of indirect heating of the furnace chamber and a charging input of materials contaminated with petroleum substances as well as discharge outlet of materials with removed petroleum substances. Input and outlet of processed materials can be designed as joint or separate.

The essence of the equipment according to the invention consists in the fact that the refining furnace is provided with a charge mixing device, arranged in its furnace chamber and the supply input of the inert gas from the pressure source and a discharge pipeline of the gas mixture and the water vapour produced by decomposition and evaporation of liquids in the charge, out of the furnace space into a single-stage or multistage condenser with a branched outlet of the individual condensation products in which a final cooler and / or the refrigeration unit is arranged and the separator of oil and water. Before the separator, the first outlet branch of the gas fumes from refining is outlet from the branched outlet and the second outlet branch of water, and the third outlet branch of oil is then conducted from the separator. From the first outlet branch, the first return branch of the gas fumes of refining is outlet back into the refining furnace chamber, in which gas collector and / or a compressor and / or air tank is inserted, which is further connected to the supply input of an inert gas from a pressurized source. Recycling of process gas may be performed also by a fan or any other device, putting the process gas in motion.

The first outlet branch of the flue gas before the first return branch, an oil washing machine is preferably interposed, behind which there is an arranged filter, and behind the first return branch the outlet into the afterburner chamber.

Also preferably, from the second outlet branch of water a second return branch is branched into the collecting point of materials freed from petroleum substances and / or from third outlet branch of oil a third return branch is branched for heating the dryer, which is interposed into a charging input of crude-oil contaminated materials in the refining furnace.

The basis of the solution according to the invention is the use of technologies for reducing the partial pressure of higher hydrocarbons by blowing or recycling of inert non-oxidising gases having an oxygen content of up to 15 % by volume for promoting vaporization of petroleum substances.

The equipment is designed as an indirectly heated furnace that is heated mainly by gas or electricity, or other media, which allow to achieve the necessary temperatures around 250 - 750°C. The material is added to the furnace in batches and during the heating, the present petroleum substances gradually evaporate and decompose. These together with water vapour are released from the furnace, where they are further processed in the condenser to a gas and a liquid part, wherein the gas part with residues of the condensed but unsettled mist progresses to other devices where the mist is gradually collected.

In preferred designs of this equipment the furnace is provided for example with reflux inlet for controlled return of at least part of the process gases back to its interior furnace chamber and the condensate from the condenser is outlet according to the measured temperature or rate of change of temperature in the water tank, and oil-water separator or oil reservoir.

In this way and with the equipment according to the invention it is possible to very efficiently and economically recycle all metal-bearing wastes contaminated with petroleum substance, and that being either without any previous treatment or for example after their pre-drying.

Generally the solution according to the invention can be used for various other similar types of waste polluted with petroleum substances or their mixtures, for cleaning soils contaminated with oil and the like.

There are no restrictions for structural designs of the furnace, it is only necessary to provide mixing to ensure a good supply of processed materials to the surface and allow evaporation of water and hydrocarbon components. Particularly suitable are rotary furnaces, cylindrical furnaces, bell furnaces, carrousel furnaces and the like. The equipment can be of batch or continuous design.

### Brief Description of the Drawings

The invention is further illustrated by specific examples of the method of removing petroleum substances from metal-bearing waste generated during the production and processing of metals, according to the invention, and a schematic drawings of exemplary equipment its implementation, where
- Fig. 1: - illustrates the equipment in the first basic design of the invention
- Fig. 2: - illustrates the equipment in the second optimum design of the invention

### Examples of the Invention Design

### Example 1

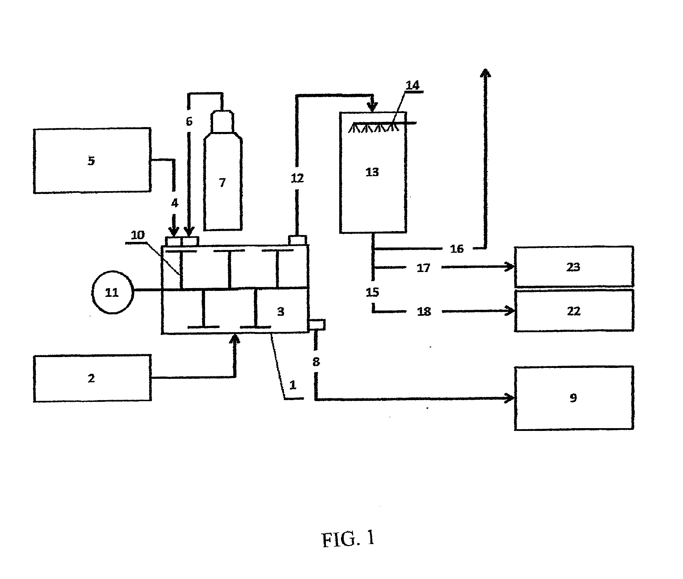

In the first example of the basic design the materials contaminated with petroleum substances, in this case the scales, grindings and other waste from chip machining, are subjected to heat refinement with indirect heating in a closed furnace chamber by gradually increasing the temperature to 550°C and washing with a protective atmosphere of nitrogen for the purpose of reducing the partial pressure and boiling point of the evaporated hydrocarbons in the mixture of gas and water vapour generated by evaporation and decomposition of the present petroleum substances and liquids from contaminated materials. This mixture is discharged and is subjected to cooling and condensation, the individual condensation products are discharged without further treatment. Gas fumes are discharged into the atmosphere and the individual condensates then in the separate containers. The relevant equipment then consists according to Fig. 1 of the refining furnace 1, with gas heat source 2, indirect heating of the furnace chamber 3, and the supply input 6 of inert gas from a pressure source 7. The refining furnace 1 is provided with a charging input 4 of petroleum-contaminated materials from the charging container 5, and a discharge outlet 8 of materials freed from petroleum substances to the collecting point 9.

In the furnace chamber 3 there is a charge mixing device 10 with the external drive 11 and the refining furnace 1 is further provided with a discharge pipeline 12 of the mixture of gas and water vapours generated by evaporation and decomposition of the liquids in the charge to the condenser 13 with spray 14, and the branched outlet 15 of each condensation product, which is branched into a first outlet branch 16 of the flue gas flowing into the atmosphere, into the second outlet branch 17 of the water-based condensate introduced into the water reservoir 23, and the third outlet branch 18 of the oil-based condensate introduced into the oil tank 22.

### Example 2

The process of removing oil substances from their contaminated materials in the second example of the invention is in terms of the refining stage similar to that in example 1, and in order to optimize the efficiency of the whole process, however, these contaminated materials are pre-dried, refining takes place in the presence of a composite protective atmosphere having an oxygen content of 8% by volume and petroleum-contaminated materials after the final heating temperature and the end of the refining process are usually cooled by spraying of water in a usual amount of 100 l to 1000 kg of processed material.

Simultaneously, during the condensation, the non-condensed part of the mixture of generated gases and water vapour is discharged for further processing, partially catalytic burns and partially as controlled process gases, i.e. with regulation of their quantity required to displace the distillate products from the furnace chamber, they return to the refining process. Protective atmosphere in which the refining process takes place, is thus formed by own products from refining with recycled non-condensed gases, water vapour and nitrogen as inert gas, which is then separately used to deactivate the furnace space before its opening after completion of the refining process.

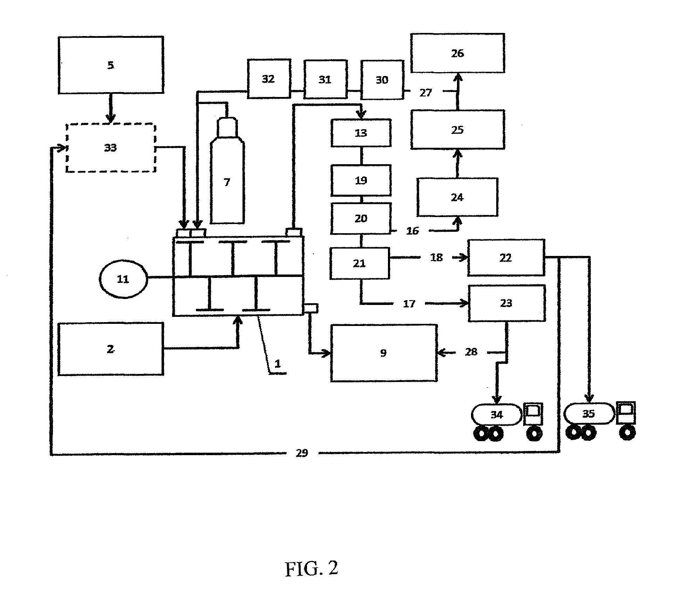

The relevant device according to Fig. 2 comprises a similar refining furnace 1 as in example 1 with the discharge pipeline 12 of the mixture of gas and water vapour produced by decomposition and evaporation of liquids in the charge to the condenser 13 with branched outlet 15 of each condensation product to the oil tank 22 and water reservoir 23, from where they are ready for removal.

Behind the condenser 13, further in the branched outlet 15 there is a final cooler 19 with cooling water temperature below 15°C, refrigeration unit 20 with a temperature below 0°C, where the substantial part of the emerging condensing aromatic hydrocarbons are condensed and a separator 21. Before the separator 21 the branched outlet 15 branches into the first outlet branch 16 of the gas fumes from refining and the separator 21 is then branched off into the second outlet branch 17 of water and a third outlet branch 18 of oil. In the first outlet branch 16 of flue gas there is an interposed oil washing machine 24, behind which there is an electrostatic filter 25 with the outlet into the afterburner chamber 26.

Before entering into the afterburner chamber 26, the first outlet branch 16 is branched into the first return branch 27 back to the furnace chamber 3 of the refining furnace 1, into which a gas collector 30 is introduced, a compressor 31 and an air tank 32, which is further connected to the supply input 6 of inert gas from the pressure source 7.

From the second outlet branch 17 of water a second return branch 28 is branched into the water reservoir 23 behind it in the collection point 9 of the materials freed from petroleum substances. From the third outlet branch 18 of oil a third return branch 29 is branched into the oil tank 22 inserted in it for heating of the dryer 33 which is interposed into the charging input 4 of crude-oil contaminated materials in the refining furnace 1. The remainder of water and oil is then discharged into the first transport tank 34 and second transport tank 35.

The method and apparatus according to the second example of device under the invention leads to achievement of an improved processing of condensation products than according to example 1, but the basic goal of the invention, i.e. removing of oil substances from the materials contaminated by them is achieved using the method and apparatus at any stage of equipment between the first and the second exemplary equipment.

In both cases it is a refining furnace with batch operation. Batch processes are used up to the production capacity of 30 t/h and for continuous productivity of over 2 t/h. Refining time is typically longer than 10 minutes, most preferably 2 hours, depending on temperature, while lower temperatures result in longer processing times.

### Field of the Application

The method of removing petroleum substances from materials contaminated by them, as well as equipment for carrying out this method according to the invention can be widely used for all metal-bearing wastes contaminated by oils, emulsions and other fluids containing petroleum additives, and similar materials contaminated by these substances.

### List of reference signs

1-refining furnace
2-heat source
3-furnace chamber
4-charging input
5-charging container
6-supply input
7-pressure source
8-discharge outlet
9-collection point
10-mixing device
11-external drive
12-discharge pipeline
13-condenser
14-spray
15-branched outlet
16-first outlet branch
17-second outlet branch
18-third outlet branch
19-final cooler
20-refrigeration unit
21-separator
22-oil tank
23-water reservoir
24-oil washing machine
25-filter
26-afterburner chamber
27-first return branch
28-second return branch
29-third return branch
30-gas collector
31-compressor
32-air tank
33-dryer
34-first transportation tank
35-second transportation tank

## Claims

1. Method of removing petroleum substances from materials contaminated by them, in particular from metal-bearing waste generated during the production and processing of metals, consisting in refining of materials contaminated with crude oil substances by indirect heating in a closed furnace chamber, **characterized by** the fact that during the refining process and the progressive indirect heating of the materials contaminated by petroleum substances to temperatures from 250 to 750°C, to promote vaporization of petroleum substances the enclosed furnace space is concurrently washed with protective gas atmosphere with an oxygen content of not more than 15% by volume, after which the mixture of gases and water vapour generated by evaporation and decomposition of the present petroleum substances from contaminated materials is removed from the enclosed furnace space, subjected to cooling and condensation, wherein the materials contaminated by petroleum substances in the course of refining are mixed and after reaching the final heating temperature and termination of the refining process they are cooled by spraying water in an amount up to 300 l per 1000 kg of processed material, and simultaneously during the condensation the uncondensed part of the mixture of gases and water vapour is discharged for further processing and / or at least partially, as process gases, they return to the refining process in a controlled way.

2. Method of removing petroleum substances according to claim 1, **characterized by the fact** that the gradual indirect heating of materials contaminated by petroleum substances is carried out optimally to temperatures from 500 to 550°C.

3. Method of removing petroleum substances according to claim 1, **characterized by the fact** that after reaching the final temperature of the heating, the enclosed furnace space is deactivated before opening with inert gas.

4. Equipment for carrying out the method of removing petroleum substances according to claims 1 - 3, consisting of a refining furnace (1) with a heat source (2) of indirect heating of its furnace chamber (3) and with a charging input (4) of materials contaminated by petroleum substances and discharge outlet (8) of materials freed from petroleum substances, **characterized by the fact** that the refining furnace (1) is provided with a charge mixing device (10), arranged in the furnace chamber (3) and the supply input (6) of inert gas from a pressure source (7) and a discharge pipeline (12) of the mixture of gas and water vapour produced by decomposition and evaporation of liquids in the charge to the condenser (13) with a branched outlet (15) of the individual condensation products in which there is a final cooler (19) and / or refrigeration unit (20) and separator (21), wherein before the separator (21) from the branched outlet (15) the first outlet branch (16) of gaseous products of refining is branched and from the separator (21) the second outlet branch (17) of water is branched and a third outlet branch (18) of oil wherein from the first outlet branch (16) the first return branch (27) of the gas is branched back into the refining furnace chamber (3) of the refining furnace (1), into which a gas collector (30) is introduced and / or compressor (31) and / or air tank (32), which is further connected to with the supply input (6) of inert gas from the pressure source (7).

5. Equipment according to claim 4, **characterized by the fact** that in the first outlet branch (16) of the gas fumes before the first return branch (27) there is an interposed oil washing machine (24), behind which there is a filter (25) and behind the first return branch (27) an outlet into the afterburner chamber (26).

6. Equipment according to at least one of the claims 4 - 5, **characterized by the fact** that from the second outlet branch (17) of water the second return branch (28) is branched into the collecting point (9) of materials freed from petroleum substances.

7. Equipment according to at least one of the claims 4 - 6, **characterized by the fact** that from the third outlet branch (18) of oil a third return branch (29) is branched for heating the dryer (33) which is interposed into the charging input (4) of crude-oil contaminated materials in the refining furnace (1).
